# EUROPÄISCHE PATENTANMELDUNG

(11) **EP 3 403 546 A1**
(43) Veröffentlichungstag der Anmeldung: **21.11.2018**
(21) Anmeldenummer: 17172058.4
(22) Anmeldetag: 19.05.2017
(51) Int. Cl.: A47J 31/36

(54) **BRÜHMODUL UND GETRÄNKEZUBEREITUNGSMASCHINE**

(71) Anmelder: Tchibo GmbH, 22297 Hamburg (DE)
(72) Erfinder: ZWICKER, Dominic, 9650 Nesslau (CH); SCHULTHEISS, Christian, 8330 Pfäffikon (CH); FEDERER, Johannes, 8400 Winterthur (CH)
(74) Vertreter: Frei Patent Attorneys

(57) **Zusammenfassung**

Ein Brühmodul zum Zubereiten eines Brühgetränks aus einer Portionskapsel (10) weist nebst einem Gehäuse (2) ein erstes Brühmodulteil (3) und ein relativ zum Gehäuse zwischen einer ersten Brühmodulteil-Position und einer zweiten Brühmodulteil-Position bewegbares zweites Brühmodulteil (4), wobei in der zweiten Brühmodulteil-Position eine Brühkammer gebildet wird. Ausserdem ist ein Bedienelement (6) vorhanden, welches manuell von einer ersten in eine zweite Bedienelement-Position bringbar ist, von welchem über einen Übertragungsmechanismus eine Bewegung in eine Bewegung des zweiten Brühmodulteils (4) übertragen wird. Weiter weist das Brühmodul eine Dämpfungseinrichtung zum Dämpfen der Bewegung des zweiten Brühmodulteils (4) auf. Diese ist so ausgebildet, dass sie eine in Funktion der Position und/oder Bewegungsrichtung nicht-konstante Dämpfungscharakteristik aufweist.

## Beschreibung

Die Erfindung betrifft Extraktionsgeräte zum Zubereiten von Getränken oder dergleichen aus einem in einer Portionskapsel enthaltenen Extraktionsgut, beispielsweise gemahlenem Kaffee. Sie betrifft insbesondere ein Brühmodul für ein Extraktionsgerät, ein Kapselerkennungsmodul sowie eine Getränkezubereitungsmaschine mit einem solchen Brühmodul und/oder Kapselerkennungsmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer manuell mittels eines Bedienhebels verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühmodulteile, die Brühflüssigkeit fliesst im wesentlichen horizontal, und der Kapselbehälter ist unterhalb der Brühkammer ausgebildet.

Die beim Verschliessen der Brühkammer und auch beim Wiederöffnen einzuleitende Kraft ist nicht konstant. Bei manuell verschliessbaren Brühmodulen ergibt sich daraus der Nachteil, dass beim Hebel- und Übersetzungsverhältnis ein Kompromiss gesucht werden muss. Es ist nicht möglich, die Hebel- und Übersetzungsverhältnisse so einzustellen, dass sich eine leichte Betätigung auch dort, wo eine hohe Kraft benötigt wird (bspw. beim Anstechen der Kapsel), einerseits und ein generell nicht zu kleiner Widerstand andererseits ergibt. Ein zu kleiner mechanischer Widerstand liefert dem Benutzer kein Feedback und wird als haptisch nicht angenehm empfunden. Ausserdem nimmt der Benutzer einen plötzlichen Anstieg oder Abfall des mechanischen Widerstands als unangenehmes Ruckeln wahr- das Gerät wirkt deshalb minderwertig.

Eine Dämpfungseinrichtung zum Dämpfen einer Schliess- oder Öffnungsbewegung eines Brühmoduls ist beispielsweise schon aus der EP 2 485 629 bekannt. Diese steht im Zusammenhang mit einem Federantrieb bei der Öffnungsbewegung und dient insbesondere dazu zu verhindern, dass am Ende der Öffnungsbewegung ein zu heftiges Anschlagen an einem Anschlag stattfindet. Die Dämpfungseinrichtung kann über Trägheit und Reibung, aber auch über Reibung allein, hydraulisch, durch Luftdämpfung, magnetisch, etc. funktionieren und dämpft generell die Schliess- und die Öffnungsbewegung gleichmässig.

Es ist eine Aufgabe der vorliegenden Erfindung, Nachteile des Standes der Technik zu überwinden und ein Brühmodul zum Zubereiten eines Brühgetränks sowie eine Getränkezubereitungsmaschine zur Verfügung zu stellen, bei welchen das Verschliessen der Brühkammer manuell erfolgt und sich trotzdem ein funktionell und haptisch befriedigendes Schliessverhalten ergibt, insbesondere ohne dass die Mechanik zu kompliziert wird und zu viele Einzelteile benötigt.

Gemäss der Erfindung wird ein Brühmodul zum Zubereiten eines Brühgetränks aus einer Portionskapsel zur Verfügung gestellt, welches aufweist:
- Ein Gehäuse;
- ein erstes Brühmodulteil und ein relativ zum Gehäuse zwischen einer ersten Brühmodulteil-Position (geöffnetes Brühmodul) und einer zweiten Brühmodulteil-Position (geschlossenes Brühmodul) bewegbares zweites Brühmodulteil, wobei in der zweiten Brühmodulteil-Position durch das erste und zweite Brühmodulteil eine Brühkammer gebildet wird, welche die sich in einer Brühposition befindende Portionskapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten; und
- ein Bedienelement welches manuell von einer ersten in eine zweite Bedienelement-Position bringbar ist, und
- einen Übertragungsmechanismus zum Übertragen einer Bewegung des Bedienelements in eine Bewegung des zweiten Brühmodulteils relativ zum Gehäuse,

Weiter weist das Brühmodul eine Dämpfungseinrichtung zum Dämpfen der Bewegung des zweiten Brühmodulteils auf. Gemäss der vorliegenden Erfindung ist die Dämpfungseinrichtung so ausgebildet, dass sie eine in Funktion der Position und/oder Bewegungsrichtung nicht-konstante Dämpfungscharakteristik aufweist.

Im Folgenden wird die Bewegung des zweiten Brühmodulteils von der ersten in die zweite Position auch "Schliessbewegung" und die umgekehrte Bewegung "Öffnungsbewegung" genannt.

Beispielswiese kann die Dämpfungseinrichtung so ausgebildet sein, dass sie nur entlang einer Teilstrecke der Verschiebungsstrecke und/oder nur während der Schliessbewegung oder nur während der Öffnungsbewegung dämpft.

Der erfindungsgemässe Ansatz ermöglicht, dass bei nicht-konstantem mechanischem Widerstand während des Schliessvorgangs oder während des Öffnungsvorgangs eine Dämpfung gezielt dort erfolgt oder dort verstärkt erfolgt, wo der Widerstand in Funktion des Weges des zweiten Brühmodulteils abrupt abnimmt. So kann die Dämpfungseinrichtung ein Ruckeln verhindern, was sich nicht nur positiv auf die Wahrnehmung durch den Benutzer, sondern auch auf die Lebensdauer des Brühmoduls auswirken kann, indem ruckartige Bewegungen vermieden werden.

Insbesondere kann die Dämpfungseinrichtung dadurch gebildet werden, dass zwei relativ zueinander bewegte Teile des Brühmoduls - bspw. eine Kurvenscheibe und das Gehäuse oder das zweite Brühmodulteil und das Gehäuse - je eine Kontaktpartie haben, die nur auf einer Teilstrecke der Verschiebungsstrecke miteinander in physischen Kontakt kommen und aneinander reiben. Solche Kontaktpartien können bspw. durch eine Gleitfläche einerseits und ein elastisches Dämpfungselement andererseits gebildet werden.

Ergänzend oder alternativ kann vorgesehen sein, dass die eine der Kontaktpartien durch ein Dämpfungselement gebildet wird, welches bei der Schliessbewegung und bei der Öffnungsbewegung in unterschiedlichem Masse gegen die andere Kontaktpartie gedrückt wird - insbesondere bei der Öffnungsbewegung oder bei der Schliessbewegung gar nicht.

In Ausführungsformen kann beispielsweise das Dämpfungselement als elastisches Element ausgebildet sein, welches in einer Aufnahme des entsprechenden Teils des Brühmoduls bewegbar aufgenommen ist, wobei es während der einen Bewegung (bspw. bei der Schliessbewegung) gegen die andere Kontaktpartie gedrückt wird. Dies kann bspw. bewirkt werden, beispielsweise indem die Aufnahme zur Richtung hin, in welche das Dämpfungselement bei der einen Bewegung gedrückt wird, eine Verengung aufweist, in welcher das Dämpfungselement zwischen den beiden Teilen zusammengedrückt wird, während es während der Öffnungsbewegung von der anderen Kontaktpartie weg ausweichen kann.

Das Dämpfungselement kann bspw. als elastischer Ring (Dämpfungsring) ausgebildet sein. Anstelle eines Dämpfungsring kann auch ein anderes beispielsweise elastisches Dämpfungselement verwendet werden, bspw. eine elastische Lippe oder ein elastisch deformierbares Kissen.

Bevorzugt ist das Dämpfungselement so angeordnet und ausgebildet, dass es, wenn es mit der Gleitfläche in Kontakt kommt, durch eine Bewegung relativ zur Gleitfläche in die eine Richtung deformiert wird und eine elastische, der Deformation entgegenwirkende Kraft auf die Gleitfläche ausübt, während es bei einer Bewegung in die andere Richtung ausweichen kann und im wesentlichen kraftfrei der Gleitfläche entlanggleiten kann. Bei Verwendung eines Dämpfungselements, welches während der Bewegung in eine der Bewegungsrichtungen in einer Verengung eingeklemmt wird, entspricht wird eine solche Deformation durch Zusammendrücken des Dämpfungselements bewirkt. Bei einer elastischen Lippe wird sie dadurch erreicht, dass die Lippe nicht senkrecht zur Gleitfläche steht sondern in einem nicht-rechten Winkel dazu, d.h. sie ragt schräg zur Gleitfläche und zu der Seite hin, in welche sie bei der Schliessbewegung (wenn diese in einem Teilstück gedämpft werden soll) bzw. bei der Öffnungsbewegung bewegt wird.

Es kann insbesondere vorgesehen sein, dass das Gehäuse eine Gleitfläche aufweist, die zum zweiten Brühmodulteil oder zu einem anderen bei dessen Bewegung bewegten Element - bspw. einer Kurvenscheibe des Übertragungsmechanismus - hin vorsteht, und dass das bewegte Element (Brühmodulteil, Kurvenscheibe, anderes Element) ein Dämpfungselement aufweist, das aufgrund einer elastischen Kraft und/oder aufgrund eines Verklemmens auf der Teilstrecke und/oder in mindestens einer Bewegungsrichtung gegen die Gleitfläche gedrückt wird - oder umgekehrt.

Eine solche Gleitfläche kann einen in Funktion der Position variierenden Abstand zum Dämpfungselement haben, so dass sich die Reibungskraft in Funktion der Position ändert.

Ein Dämpfungselement kann insbesondere aus einem Elastomer gefertigt sein.

Der Übertragungsmechanismus zum Übertragen der Bewegung des Bedienelements kann eine drehbar am Gehäuse gelagerte Kurvenscheibe mit einer ersten Führungsfläche aufweisen, wobei das zweite Brühmodulteil durch die erste Führungsfläche entlang einer gehäusefesten Verschiebungsstrecke von der ersten Brühmodulteil-Position in die zweite Brühmodulteil-Position verschiebbar ist, indem die Kurvenscheibe gedreht wird, und dass die erste Führungsfläche ein entlang der ersten Führungsfläche signifikant (bspw. um mindestens einen Faktor 2) variierendes Übersetzungsverhältnis (Verhältnis zwischen dem vom zweiten Brühmodulteil zurückgelegten Weg einerseits und der von der Kurvenscheibe zurückgelegten Winkelbewegung andererseits) definiert.

Dabei variiert das Übersetzungsverhältnis signifikant. In Ausführungsbeispielen unterscheidet es sich zwischen dem grössten und dem kleinsten Wert um mindestens einen Faktor 2, oft um mindestens einen Faktor 4, 6, 8, 10 oder mehr.

In solchen Ausführungsformen kann das Übersetzungsverhältnis insbesondere so gewählt sein, dass es bei grösserer Schliesskraft kleiner ist als dort, wo die Schliesskraft klein ist.

Nebst der ersten Führungsfläche kann die Kurvenscheibe auch eine zweite Führungsfläche definieren, durch welche das zweite Brühmodulteil entlang der gehäusefesten Verschiebungsstrecke von der zweiten Brühmodulteil-Position in die erste Brühmodulteil-Position verschiebbar ist. Auch eine solche zweite Führungsfläche kann insbesondere so verlaufen, dass ihr entlang ein variables Übersetzungsverhältnis definiert ist, beispielsweise ebenfalls in Abschnitten, und beispielsweise ebenfalls substantiell, mit einem Faktor zwischen dem grössten und dem kleinsten Übersetzungsverhältnis von mindestens 2, oder mindestens Faktor 4, 6, 8, 10 oder mehr.

Die erste und die zweite Führungsfläche können als Begrenzungen einer Führungsöffnung in der Kurvenscheibe (eine solche Öffnung kann ein durchgehendes Loch oder eine Vertiefung sein) ausgebildet sein. Ein beispielsweise stiftartiges Führungselement, welches mit dem zweiten Brühmodulteil verbunden ist, bspw. indem es an diesem angeformt ist oder von diesem geführt wird, greift dann in diese Führungsöffnung ein.

Die zweite Führungsfläche kann nicht-parallel zur ersten Führungsfläche sein, d.h. es ist nicht nötig, dass die Übersetzungsverhältnisse an einer bestimmten Position des zweiten Brühmodulteils bei der Schliess- und bei der Öffnungsbewegung gleich gross sind.

Das zweite Brühmodulteil ist beispielsweise linear-translatorisch, insbesondere horizontal relativ zum Gehäuse bewegbar, d.h. die Verschiebungsstrecke ist insbesondere linear und horizontal. Das erste Brühmodulteil kann gehäusefest montiert sein. Es ist aber auch nicht ausgeschlossen, dass auch das erste Brühmodulteil bewegbar ist und bspw. eine dem zweiten Brühmodulteil entgegengesetzte Bewegung macht.

Die gehäusefeste Verschiebungsstrecke kann bspw. durch eine Führungsbahn, bspw. Führungsnut, des Gehäuses definiert sein, in welche ein mit dem zweiten Brühmodulteil verbundenes Führungselement, bspw. ein Führungsstift, eingreift. Ein solches Führungselement kann auch mit der Führungsfläche zusammenwirken, wobei dann ein Abschnitt des Führungselements in die Führungsbahn eingreift und ein anderer Abschnitt mit der Führungsfläche zusammenwirkt. Zu diesem Zweck kann ein solches Führungselement optional mit zwei voneinander entkoppelten Lagern versehen sein, wovon ein erstes mit der Führungsbahn und ein zweites mit der Führungsfläche im Eingriff steht.

Insbesondere kann das zweite Brühmodulteil ein Injektor sein, durch welchen die Portionskapsel angestochen wird und von welchem beispielsweise heisses Wasser als Brühflüssigkeit in die Portionskapsel eingeleitet wird. Das erste Brühmodulteil kann eine Ausleitvorrichtung zum Ausleiten des Extraktionsprodukts aus der Kapsel bilden. Zu diesem Zweck weist es beispielsweise extraktionsseitige Anstechelemente zum extraktionsseitigen Anstechen der Kapsel oder andere Strukturen auf, welche die Kapsel extraktionsseitig öffnen. Auch das Umgekehrte ist denkbar, d.h. das erste Brühmodulteil kann den Injektor und das zweite Brühmodulteil die Ausleitvorrichtung bilden.

Das Bedienelement kann insbesondere ein Bedienhebel sein, welcher durch eine Kippbewegung von oben nach unten von der ersten in die zweite Position gebracht werden kann. In der zweiten Position verschliesst beispielsweise der Bedienhebel eine Kapseleinlegeöffnung, welche durch ein Gehäuse der Getränkezubereitungsmaschine - beispielsweise des Brühmoduls - gebildet wird.

Die Erfindung betrifft auch eine Getränkezubereitungsmaschine mit einem Brühmodul der diskutierten Art.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1 und 2: je eine Ansicht eines Brühmoduls im geöffneten und im geschlossenen Zustand;
- Fig. 3: eine Explosionsdarstellung des Brühmoduls von Fig. 1 und 2;
- Fig. 4: eine Kurvenscheibe des Brühmoduls von Fig. 1-3;
- Fig. 5 und 6: je eine vereinfachte Schnittdarstellung des Brühmoduls während des Schliess- bzw. Öffnungsvorgangs;
- Fig. 7-9: je ein Detail einer Schnittdarstellung des Brühmoduls, welche die Dämpfungseinrichtung gut sichtbar macht, während unterschiedlichen Phasen; und
- Fig. 10: ein Schema einer erfindungsgemässen Kaffeemaschine.

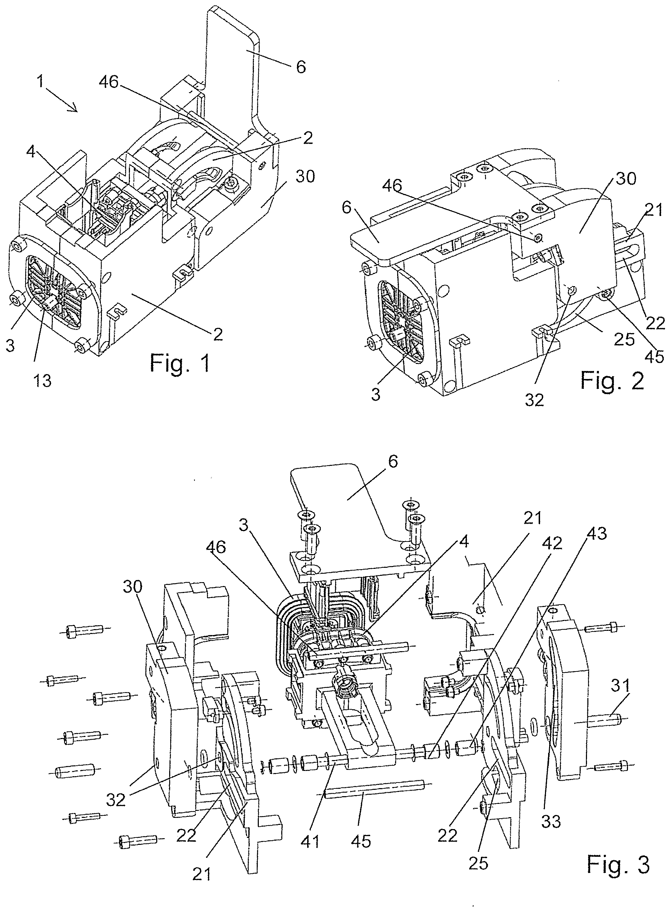

Das Brühmodul 1 gemäss **Figuren 1-3****,** weist ein Brühmodulgehäuse 2 auf. Im Brühmodulgehäuse 2 sind zwei relativ zueinander bewegbare Brühmodulteile geführt, nämlich eine Ausleitvorrichtung 3 und ein Injektor 4. Das Gehäuse weist hier zwei Gehäuse-Seitenteile 21 auf.

Der Injektor 4 weist Perforationselemente zum Anstechen einer Portionskapsel auf, die mindestens teilweise mit einem Extraktionsgut - bspw. gemahlenem Kaffee - gefüllt ist. Der Injektor 4 ist eingerichtet, eine Flüssigkeit - bspw. heisses Wasser - durch die Perforationselemente oder an diesen vorbei in die angestochene Kapsel einzubringen wobei das Wasser über eine Wasserzuführung (nicht gezeigt) zuführbar ist, die bspw. einen flexiblen Schlauch aufweisen kann.

Auch die Ausleitvorrichtung 3 weist im hier beschriebenen Ausführungsbeispiel Perforationselemente auf, nämlich extraktionsseitige Anstechspitzen. Diese können beispielsweise ausgebildet sein wie in WO 2015/039258 oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Für die Zubereitung eines Brühgetränks wird wie an sich bekannt eine Kapsel zwischen der Ausleitvorrichtung 3 und dem Injektor 4 platziert, und diese werden so aufeinander zubewegt, dass zwischen diesen eine die Kapsel umfassende Brühkammer gebildet wird. Das heisse Wasser wird durch den Injektor unter Druck der Kapsel zugeführt, und das Extraktionsprodukt fliesst durch die Ausleitvorrichtung 3 via einen Getränkeauslauf 13 in ein bspw. darunter platziertes Trinkgefäss ab.

Die relative Bewegung des zweiten Brühmodulteils (Injektor) relativ zum ersten Brühmodulteil (Ausleitvorrichtung) wird im hier beschriebenen Ausführungsbeispiel dadurch erreicht, dass die Ausleitvorrichtung 3 gehäusefest montiert ist, während der Injektor 4 entlang der horizontalen Achse bewegbar ist.

Vor der Zubereitung eines Brühgetränks legt der Benutzer über eine am Gehäuse oberseitig angeordnete Kapseleinlegeöffnung eine Kapsel ein, die durch entsprechende Mittel, bspw. wie in WO 2015/048914 beschrieben, auf der dafür vorgesehenen Höhe gehalten wird, bis die Brühkammer geschlossen wird. Ein solches Einlegen der Kapsel in die Brühkammer kann direkt erfolgen, oder wie bspw. in WO 2016/087190 beschrieben, indirekt, indem die Kapsel zunächst an einer Position oberhalb der Brühkammer gehalten wird, bspw. zum Zweck einer Kapselerkennung.

Für die Bedienung durch den Benutzer zwecks Schliessen der Brühkammer weist das Brühmodul einen Bedienhebel 6 auf, der fest mit einer aus zwei Kurvenscheiben 30 zusammengesetzten Kurvenscheibenanordnung befestigt ist. Die Kurvenscheiben ihrerseits sind um je einen Drehzapfen 31, welcher in je einer Bohrung 32 im entsprechenden Gehäuse-Seitenteil 21 und in der entsprechenden Kurvenscheibe 30 angeordnet ist, relativ zum Gehäuse schwenkbar gelagert. Über einen ersten und einen zweiten optionalen Stabilisierungsstift 45, 46 sind die beiden Kurvenscheiben 30 miteinander verbunden, um der Kurvenscheibenanordnung zusätzliche Stabilität zu verleihen. Für den ersten Führungsstift 45 ist in den beiden Gehäuse-Seitenteilen 21 je eine zweite Gehäuse-Führungsbahn 25 angeordnet, in welcher der erste Führungsstift 45 bei einer Schwenkbewegung der Kurvenscheibenanordnung lose oder geführt bewegt werden kann.

An den Gehäuse-Seitenteilen 21 ist ausserdem je eine erste horizontale erste Gehäuse-Führungsbahn 22 ausgebildet, welche die gehäusefeste Verschiebungsstrecke definiert. Ein Führungsstift 41, der fest mit dem zweiten Brühmodulteil 4 verbunden ist, greift durch die Gehäuse-Führungsbahn 22 hindurch in je eine Führungsöffnung 33 der Kurvenscheiben 30 ein.

Der Führungsstift weist ein zu diesem Zweck hier beidseitig je ein erstes Gleitlager 42 und ein von diesem rotationsmässig entkoppeltes zweites Gleitlager 43 auf. Das erste Gleitlager 42 steht mit der Gehäuse-Führungsbahn 22 im Eingriff, während das zweite Gleitlager 43 in die entsprechende Führungsöffnung 33 ragt.

Aufgrund der von der Führungsöffnung gebildeten Führungsflächen wird eine Schwenkbewegung der Kurvenscheiben 30 bei Betätigung des Bedienhebels 6 in eine Verschiebebewegung des zweiten Brühmodulteils 4 entlang der von den Gehäuse-Führungsbahnen 22 definierten Verschiebungsstrecke umgesetzt.

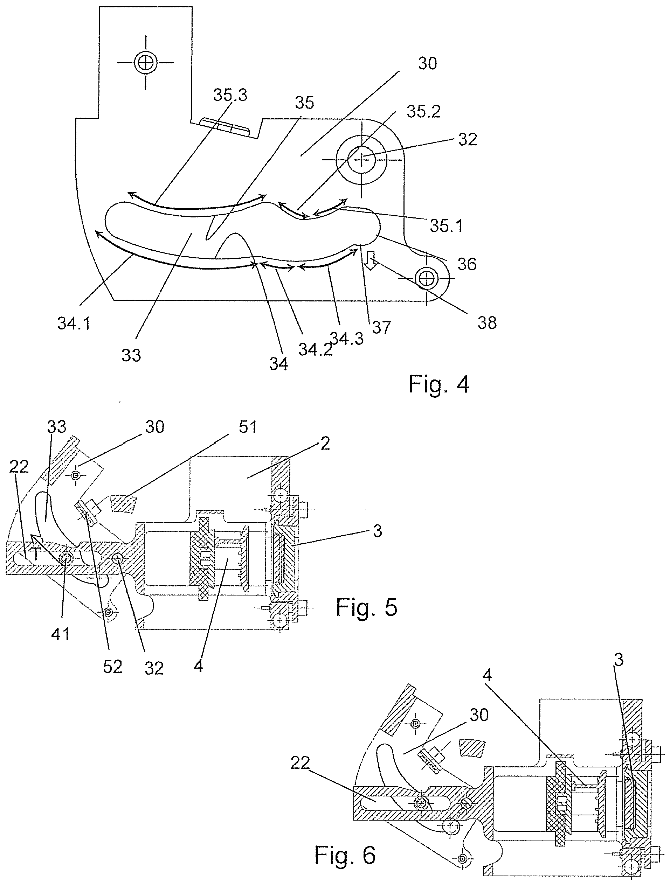

Wie insbesondere **Figur 4** zeigt, bildet die Führungsöffnung 33 aufgrund ihrer Form eine erste Führungsfläche 34 und eine zu dieser nicht parallele zweite Führungsfläche 35, welche die Verschiebung des Brühmodulteils bei der Schliess- bzw. bei der Öffnungsbewegung bewirken. Das nicht konstante Übersetzungsverhältnis wird dadurch bewirkt, dass die Führungsflächen eine Bahn beschreiben, die abweichend von einer archimedischen Spirale mit der Bohrung 32 als Mittelpunkt verläuft.

Im dargestellten Ausführungsbeispiel weist die erste Führungsfläche 34 einen ersten Abschnitt 34.1 mit einem vergleichsweise grossen Übersetzungsverhältnis auf. In einem zweiten Abschnitt 34.2 wird ein deutlich kleineres Übersetzungsverhältnis definiert, damit der Benutzer beispielsweise beim Anstechen der Kapsel nicht zu viel Kraft benötigt. In einem dritten Abschnitt 34.3 ist das Übersetzungsverhältnis mittelgross. Im entsprechenden dritten Bereich der Verschiebungsstrecke werden bspw. die Anstechspitzen ganz in die Kapsel eingeführt und wird ggf. die Kapsel zwischen den Brühmodulteilen leicht komprimiert, weshalb ein mittelgrosser Kraftaufwand benötigt wird. Der Übergang von einem kleinen zu einem mittelgrossen Übersetzungsverhältnis zwischen dem zweiten und dem dritten Abschnitt (der für den Benutzer spürbare Widerstand pro Verschiebungsstrecke nimmt wieder zu) verhindert auch ein plötzliches Nachgeben nach dem erfolgten Anstechen; ein solches plötzliches Nachgeben wird vom Benutzer als Ruckeln wahrgenommen und kann sich aufgrund ruckartiger Belastungen auch negativ auf die Lebensdauer des Brühmoduls auswirken.

Zur Illustration: In einer Ausführungsform beträgt das Übersetzungsverhältnis im ersten Abschnitt zwischen 0.6 mm/° und 2.5 mm/° (das Übersetzungsverhältnis muss innerhalb des jeweiligen Abschnitts nicht konstant sein, sondern kann durchaus variieren), im zweiten Abschnitt zwischen 0.1 mm/° und 0.2 mm/° und im dritten Abschnitt zwischen 0.2 mm/° und 0.4 mm/°. Beispielsweise wird durch den ersten Abschnitt das zweite Brühmodulteil innerhalb vom ca. 30° Hebelbewegung ca. 25 mm nach vorne geschoben, im zweiten Abschnitt innerhalb von 15° Hebelbewegung um 2-3 mm und im dritten Abschnitt innerhalb von 40° Hebelbewegung um 10-12 mm. Selbstverständlich sind auch ganz andere Zahlenwerte möglich, das Optimum hängt von der konkreten Geometrie, den gewählten Materialien und gegebenenfalls auch der Dämpfungseinrichtung ab. Auf jeden Fall ist der Unterschied zwischen den verschiedenen Übersetzungsverhältnissen entlang des Wegs substantiell.

Die zweite Führungsfläche 35 weist für den umgekehrten Weg ebenfalls drei Abschnitte auf. Ein erster Abschnitt 35.1 mit einem mittelgrossen Übersetzungsverhältnis dient dem anfänglichen Öffnen der Brühkammer und dem ersten Schritt im Prozess des Entfernens der Kapsel. In einem zweiten Abschnitt 35.2 ist das Übersetzungsverhältnis klein, weil beispielsweise eine grosse Kraft nötig ist, um die Kapsel unter Deformation weiter herauszuziehen, so dass sie anschliessend nach untern fallen kann. In einem dritten Abschnitt 35.3 ist das Übersetzungsverhältnis gross, so dass zum genügend weiten Öffnen der Brühkammer bei kleinem mechanischem Widerstand kein zu grosser Weg des Bedienelements nötig ist.

Die Übersetzungsverhältnisse und durch die zweite Führungsfläche bewirkten zurückgelegten Wege können ungefähr den Werten der ersten Führungsfläche entsprechen, wobei der dritte Abschnitt der ersten Führungsfläche dem ersten Abschnitt der zweiten Führungsfläche entspricht, die zweiten Abschnitte einander entsprechen und der erste Abschnitt der ersten Führungsfläche dem dritten Abschnitt der zweiten Führungsfläche entspricht.

In der WO 2015/048914 ist ein Beispiel einer Brühkammer beschrieben, in welchem die Kapsel beim Schliessen der Brühkammer und beim erneuten Öffnen der Brühkammer in unterschiedlichen Phasen unterschiedlichen mechanischen Belastungen ausgesetzt ist, weshalb auch unterschiedlich grosse Schliess- bzw. Öffnungskräfte aufzuwenden sind. Die vorliegende Erfindung beschränkt sich jedoch nicht auf Brühkammern der in WO 2015/048914 beschriebenen Art sondern ist auf jegliche Art von Brühkammern für Portionskapseln anwendbar, bei welchen die beim Schliessen und/oder Öffnen aufzuwendende Kraft nicht über den ganzen Weg konstant ist.

Ein spezielles optionales Merkmal ist in Figur 4 ebenfalls dargestellt. Die Führungsöffnung 33 der Kurvenscheibe bildet zu ihrem inneren Ende hin einen End-Abschnitt, in welchem die erste Führungsfläche 34 über einen Absatz 37 in eine leicht hinterschnittene Partie übergeht. Das bewirkt ein Überspannen der Anordnung, d.h. wenn beim Brühen durch einen in der Brühkammer erzeugten Innendruck eine nach aussen Gerichtete Kraft auf das zweite Brühkammerteil wirkt, bewirkt das eine Krafteinleitung 38 durch den Führungsstift in die Kurvenscheibe, welche aufgrund des Hinterschnitts einer Öffnungsbewegung entgegenwirkt - der Führungsstift wird also in den hinterschnittenen End-Abschnitt hineingedrückt, wie das durch den die Krafteinleitung 38 symbolisierenden Blockpfeil dargestellt ist. Die Konstruktion ist in diesem Sinn also selbsthemmend ausgebildet.

**Figur 5** zeigt ausschnittsweise das Brühmodul bei der Schliessbewegung wobei der Führungsstift durch Anstehen an der ersten Führungsfläche in der ersten Gehäuse-Führungsbahn 22 in Fig. 5 nach rechts verschoben wird, wenn die Kurvenscheibe 30 im Uhrzeigersinn verschwenkt wird. Das Übersetzungsverhältnis bestimmt sich in der dargestellten Ausführungsform aus dem Winkel zwischen der Tangente T zur Führungsfläche 33 am Ort der Berührung mit dem Führungsstift 41 einerseits und der durch die Gehäuse-Führungsbahn 22 definierten Bewegungsrichtung - im dargestellten Beispiel der Horizontalen - andererseits. Je flacher dieser Winkel ist, desto grösser ist das Übersetzungsverhältnis. Eine kompliziertere Beziehung zwischen Übersetzungsverhältnis und Verlauf der Führungsfläche ergibt sich dann, wenn die Bewegungsrichtung abweichend vom hier diskutierten Ausführungsbeispiel nicht radial zur Drehachse (welche durch die Bohrung 32 definiert ist) verläuft.

**Figur 6** zeigt die entsprechende Darstellung bei der Öffnungsbewegung durch ein Verschwenken der Kurvenscheibe im Gegenuhrzeigersinn.

Figuren 5 und 6 deuten auch eine Dämpfungseinrichtung an, welche durch ein Dämpfungsorgan 52 und eine mit diesem zusammenwirkende Gleitfläche gebildet wird. Das Dämpfungsorgan ist dabei im vorliegenden Beispiel an der Kurvenscheibe vorhanden, und die Gleitfläche ist gehäusefest angeordnet, bspw. durch das Gehäuse oder gebildet oder an einem gehäusefest angeordneten Element ausgebildet. Es könnte aber auch umgekehrt sein; generell benötigt die Dämpfungseinrichtung gemäss dem hier beschriebenen Prinzip zwei während des Öffnungs- und Schliessvorgangs relativ zueinander bewegte Teile, zwischen denen sich auf einem Teil des Schiesswegs und/oder eventuell auch des Öffnungswegs Reibung ergeben kann.

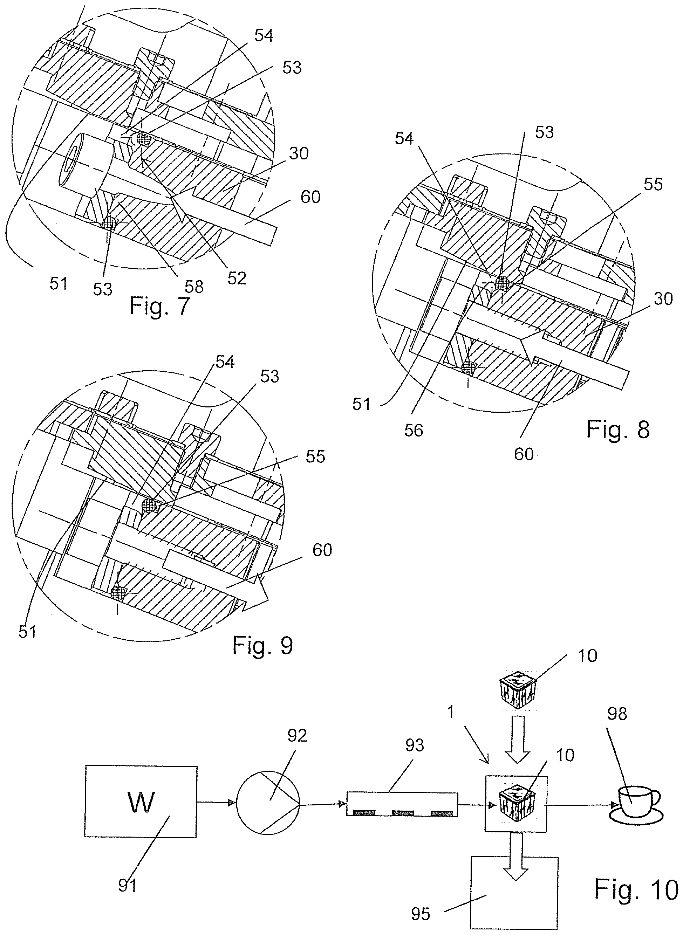

Figuren 7-9 zeigen ein Detail des Brühmodul mit Dämpfungsorgan 52 und Gleitfläche 51 in unterschiedlichen Stadien.

Das Dämpfungsorgan weist ein elastisches Element - hier einen Dämpfungsring 53, der sich um eine Führungspartie 58 herum erstreckt - auf. Der Dämpfungsring ist in einer dafür vorgesehene Aufnahme 54 angeordnet und in dieser teilweise bewegbar

**Figur 7** zeigt die Situation während des Schliessvorgangs, bei welchem die Kurvenscheibe 30 in Richtung des Bewegungsrichtung 60 zum Gehäuse bewegt wird (vgl. Fig. 5), und zwar kurz vor der Endphase des Schliessvorgangs, bspw. dann wenn besonders hohe Kräfte auf das zweite Brühkammerteil einwirken. Der Dämpfungsring befindet sich lose in der Aufnahme 54, ohne physischen Kontakt mit einem gehäusefesten Teil: es gibt keine Dämpfung.

In **Figur 8** ist die Situation dargestellt, die sich kurze Zeit später, also gegen das Ende des Schliessvorgangs. Der Dämpfungsring 53 stösst am der Gleitfläche 51 an und wird aufgrund der Vorwärtsbewegung (Bewegungsrichtung 60) der Kurvenscheibe in eine Verengung 55 gedrückt, die sich zwischen Aufnahme und Gleitfläche 51 ergibt und die so dimensioniert ist, dass der Dämpfungsring nur unter Deformation darin Platz findet. Deshalb drückt der Dämpfungsring aufgrund seiner Elastizität gegen die Gleitfläche 51, und es ergibt sich ein der Vorwärtsbewegung entgegenwirkender Reibungswiderstand. Im gezeichneten Ausführungsbeispiel nimmt dieser Reibungswiderstand während der weiteren Vorwärtsbewegung graduell ab, da die Gleitfläche 51 nicht ganz parallel zur Bewegungsrichtung verläuft sondern leicht abgeschrägt, also fliehend ausgebildet ist.

Während der Öffnungsbewegung (**Figur 9**, Bewegungsrichtung 60) drückt die ansetzende Reibung zwischen Gleitfläche 51 und Dämpfungsring 53 diesen nicht in die Verengung 55 sondern lässt ein Ausweichen aus dieser hinaus in einen Bereich, in dem der Dämpfungsring 53 ohne Deformation Platz findet, zu. Daher ergibt sich nur eine minimale Reibung zwischen Dämpfungsring 53 und Gleitfläche 51, d.h. die Öffnungsbewegung wird nicht gehindert.

Wenn sich der Dämpfungsring 53 während Schliessbewegung während der Annäherung an die Gleitfläche 51 ausserhalb der Verengung 55 befindet, sorgt eine optionale Schrägfläche 56 zusammen mit der intrinsischen Elastizität des Dämpfungsringes und dessen in-Kontakt-Kommen mit der Gleitfläche 51 dafür, dass der Dämpfungsring während der in Fig. 8 dargestellten Phase in diese hineingedrückt wird.

Anstelle eines Dämpfungsring kann auch ein andere beispielsweise elastisches Dämpfungselement verwendet werden, bspw. eine elastische Lippe. Bevorzugt ist das Dämpfungselement so angeordnet und ausgebildet, dass es, wenn es mit der Gleitfläche in Kontakt kommt, durch eine Bewegung relativ zur Gleitfläche in die eine Richtung deformiert wird und eine elastische, der Deformation entgegenwirkende Kraft auf die Gleitfläche ausübt, während es bei einer Bewegung in die andere Richtung ausweichen kann und im wesentlichen kraftfrei der Gleitfläche entlanggleiten kann. Bei einer elastischen Lippe wird das dadurch erreicht, dass die Lippe nicht senkrecht zur Gleitfläche steht sondern in einem nicht-rechten Winkel dazu.

Eine erfindungsgemässe Maschine zum Zubereiten eines Brühgetränks aus einer Portionskapsel 10, nämlich hier eine Kaffeemaschine, mit einem Brühmodul 1 ist in **Figur 10** schematisch dargestellt. Sie weist nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Unterhalb des Brühmoduls ist ausserdem ein Kapselbehälter 95 angeordnet, in welchen die Kapseln 10 nach dem Brühprozess fallen bzw. transportiert werden. Das Bezugszeichen 98 bezeichnet eine Kaffeetasse.

### Bezugszeichenliste:

- 1: Brühmodul
- 2: Brühmodulgehäuse
- 3: Ausleitvorrichtung
- 4: Injektor
- 6: Bedienhebel
- 13: Getränkeauslauf
- 21: Gehäuse-Seitenteil
- 22: Erste Gehäuse-Führungsbahn
- 25: Zweite Gehäuse-Führungsbahn
- 30: Kurvenscheibe
- 31: Drehzapfen
- 32: Bohrungen für Drehzapfen
- 33: Führungsöffnung
- 34: erste Führungsfläche
- 34.1: erster Abschnitt
- 34.2: zweiter Abschnitt
- 34.3: dritter Abschnitt
- 35: zweite Führungsfläche
- 35.1: erster Abschnitt
- 35.2: zweiter Abschnitt
- 35.3: dritter Abschnitt
- 36: End-Abschnitt
- 37: Absatz
- 38: Krafteinleitung beim Brühen
- 41: Führungsstift
- 42: erste Gleitlager
- 43: zweite Gleitlager
- 45: erster Stabilisierungsstift
- 46: zweiter Stabilisierungsstift
- 51: Gleitfläche
- 52: Dämpfungsorgan
- 53: Dämpfungsring
- 54: Aufnahme
- 55: Verengung
- 56: Schrägfläche
- 58: Führungspartie
- 60: Bewegungsrichtung
- 91: Wassertank
- 92: Pumpe
- 93: Wasserheizungsvorrichtung
- 95: Kapselbehälter
- 98: Kaffeetasse

## Patentansprüche

1. Brühmodul zum Zubereiten eines Brühgetränks aus einer Portionskapsel, aufweisend:
• ein Gehäuse (2)
• ein erstes Brühmodulteil (3) und ein relativ zum Gehäuse zwischen einer ersten Brühmodulteil-Position und einer zweiten Brühmodulteil-Position bewegbares zweites Brühmodulteil (4), wobei in der zweiten Brühmodulteil-Position eine Brühkammer gebildet wird, welche die sich in einer Brühposition befindende Portionskapsel (10) beim Brühvorgang mindestens teilweise umgibt, wobei das Brühmodul eingerichtet ist, durch das Einleiten einer Brühflüssigkeit in die Portionskapsel ein Brühgetränk zu brühen und dieses aus der Portionskapsel abzuleiten;
• ein Bedienelement (6) welches manuell von einer ersten in eine zweite Bedienelement-Position bringbar ist,
• einen Übertragungsmechanismus zum Übertragen einer Bewegung des Bedienelements (6) in eine Bewegung des zweiten Brühmodulteils relativ zum Gehäuse
**gekennzeichnet durch** eine Dämpfungseinrichtung zum Dämpfen der Bewegung des zweiten Brühmodulteils, die so ausgebildet ist, dass sie eine in Funktion der Position und/oder in Funktion der Bewegungsrichtung nicht-konstante Dämpfungscharakteristik aufweist.

2. Brühmodul nach Anspruch 1, wobei das Bedienelement (6) ein Bedienhebel ist, welcher durch eine Kippbewegung von oben nach unten von der ersten in die zweite Bedienelement-Position bringbar ist, und wobei das Bedienelement in der zweiten Bedienelement-Position eine Kapseleinlegeöffnung verschliesst.

3. Brühmodul nach Anspruch 1 oder 2, wobei das zweite Brühmodulteil (4) linear-translatorisch, insbesondere horizontal, relativ zum Gehäuse bewegbar und das erste Brühmodulteil (3) gehäusefest montiert ist.

4. Brühmodul nach einem der vorangehenden Ansprüche, wobei die durch die Dämpfungseinrichtung bewirkte Dämpfung durch Reibung bewirkt wird.

5. Brühmodul nach einem der vorangehenden Ansprüche, wobei die Dämpfungseinrichtung so ausgebildet ist, dass sie nur entlang einer Teilstrecke der Verschiebungsstrecke dämpft und/oder dass sie nur während der Schliessbewegung oder nur während der Öffnungsbewegung dämpft.

6. Brühmodul nach Anspruch 5, wobei zwei bei einer Bewegung des Bedienelements relativ zueinander bewegte Teile je eine Kontaktpartie haben, die nur auf einer Teilstrecke der Verschiebungsstrecke miteinander in physischen Kontakt kommen und aneinander reiben.

7. Brühmodul nach einem der vorangehenden Ansprüche, wobei das Gehäuse eine Gleitfläche (51) aufweist und ein bei der Bewegung des zweiten Brühmodulteils bewegtes Element ein Dämpfungselement (53) aufweist, das aufgrund einer elastischen Kraft und/oder aufgrund eines Verklemmens auf der Teilstrecke gegen die Gleitfläche gedrückt wird, oder umgekehrt.

8. Brühmodul nach Anspruch 7 wobei das Dämpfungselement (53) elastomere Eigenschaften aufweist.

9. Brühmodul nach Anspruch 7 oder 8, wobei das Dämpfungselement (53) so angeordnet und ausgebildet, dass es, wenn es mit der Gleitfläche (51) in Kontakt kommt, durch eine Bewegung relativ zur Gleitfläche in die eine Richtung deformiert wird und eine elastische Kraft auf die Gleitfläche ausübt, während es bei einer Bewegung in die andere Richtung ausweichen kann und im wesentlichen kraftfrei der Gleitfläche entlanggleiten kann.

10. Brühmodul nach Anspruch 9, wobei das Dämpfungselement (53) bewegbar in einer Aufnahme (54) angeordnet ist, welche zu einer Seite hin eine Verengung (55) bildet, in welche das Dämpfungselement bei der Bewegung relativ zur Gleitfläche in die eine Richtung gedrückt wird.

11. Brühmodul nach einem der Ansprüche 7-10, wobei die Gleitfläche (51) einen in Funktion einer relativen Position variierenden Abstand zum Dämpfungselement (53) hat, so dass sich die Reibungskraft in Funktion der Position ändert

12. Brühmodul nach einem der vorangehenden Ansprüche, wobei der Übertragungsmechanismus eine durch das Bedienelement (6) drehbar am Gehäuse (2) gelagerte Kurvenscheibe (30) mit einer ersten Führungsfläche (34) aufweist, wobei das zweite Brühmodulteil durch die erste Führungsfläche entlang einer gehäusefesten Verschiebungsstrecke von der ersten Brühmodulteil-Position in die zweite Brühmodulteil-Position verschiebbar ist, indem die Kurvenscheibe gedreht wird, und dass die erste Führungsfläche (34) ein entlang der ersten Führungsfläche variables Übersetzungsverhältnis definiert.

13. Brühmodul nach Anspruch 12, wobei das Gehäuse eine Gleitfläche (51) aufweist und wobei die Kurvenscheibe ein Dämpfungselement (53) aufweist, das aufgrund einer elastischen Kraft und/oder aufgrund eines Verklemmens auf der Teilstrecke gegen die Gleitfläche (51) gedrückt wird oder umgekehrt.

14. Brühmodul nach Anspruch 12 oder 13, wobei die Kurvenscheibe ausserdem eine zweite Führungsfläche (35) definiert, durch welche das zweite Brühmodulteil entlang der gehäusefesten Verschiebungsstrecke von der zweiten Brühmodulteil-Position in die erste Brühmodulteil-Position verschiebbar ist.

15. Getränkezubereitungsmaschine, insbesondere Kaffeemaschine, aufweisend eine Wasserzufuhr, eine Pumpe (92) und ein Wassererhitzungsmittel (93) sowie ein Brühmodul nach einem der vorangehenden Ansprüche.
